# EUROPÄISCHE PATENTSCHRIFT

(11) **EP 3 066 419 B1**
(45) Veröffentlichungstag und Bekanntmachung des Hinweises auf die Patenterteilung: **26.09.2018**
(21) Anmeldenummer: 14801960.7
(22) Anmeldetag: 10.11.2014
(51) Int. Cl.: G01C 11/02, G01C 21/32, B64C 39/02

(54) **VERFAHREN UND SYSTEM ZUR ERSTELLUNG EINER VEKTORKARTE**
METHOD AND SYSTEM FOR PRODUCING A VECTOR MAP
PROCÉDÉ ET SYSTÈME D'ÉLABORATION D'UNE CARTE VECTORIELLE

(30) Priorität: 23.01.2014 DE 102014201238
(43) Veröffentlichungstag der Anmeldung: 14.09.2016
(73) Patentinhaber: Siemens Aktiengesellschaft, 80333 München (DE)
(72) Erfinder: HILLIER, Gernot, 84032 Landshut (DE); MAIER, Rupert, 91330 Eggolsheim (DE)
(86) Internationale Anmeldenummer: PCT/EP2014/074138
(87) Internationale Veröffentlichungsnummer: WO 2015/110195

(56) Entgegenhaltungen:
- EP-A1- 0 325 957
- ES-A1- 2 390 441
- US-A1- 2008 059 065
- US-A1- 2010 020 074
- US-A1- 2013 235 199

## Beschreibung

Die Erfindung betrifft ein Verfahren und ein System zur Erstellung einer Vektorkarte eines vorgegebenen Gebietes mithilfe eines unbemannten automatisierten Fluggerätes.

Die Druckschrift US 2013/235199 A1 offenbart ein Verfahren und System, bei dem Bilder von Übersichts- und Detailbildgeräten erfasst werden, so dass Übersichtsbilder mit einem ersten Grad an Redundanz erzeugt werden und Detailbilder mit weniger Überlappung und einem zweiten Grad an Redundanz erfasst werden.

Die Druckschrift EP 0 325 957 A1 offenbart ein Verfahren zur großmaßstäblichen Kartierung von Parametern mehrdimensionaler Strukturen in Naturräumen. Der zu kartierende Naturraum oder Teilbereiche daraus werden erfindungsgemäß bei ersten Bildflügen in einer Flughöhe zwischen etwa 150 m bis 500 m über dem Boden mit mit Erkundungskammern) in Kombination mit Telekammern zur Erstellung von Detailaufnahmen aus dem durch die Erkundungskammern abgedeckten Bereichsausschnitt aufgenommenen Reihenmessluftbildern erfasst. Die Reihenmessluftbilder werden mittels Orientierungshilfen hinsichtlich ihrer Lage im Naturraum festgelegt und unter Anwendung photogrammetrischer Methoden ausgewertet.

Für die Routenführung von Fahrzeugen werden digitale Kartendaten benötigt. Diese Kartendaten können in einem Vektordatenformat vorliegen. Vektordaten in entsprechenden Vektormodellen beschreiben raumbezogene Objekte anhand von Punkten bzw. Knoten sowie Linien bzw. Kanten. Vektordaten werden somit über Koordinaten und Verbindungen angegeben. Diese Verbindungen können die Topologie eines Infrastrukturnetzes, insbesondere eines Straßennetzes bzw. Verkehrsnetzes, wiedergeben. Die Vektordaten werden dabei herkömmlicherweise mit relevanten Zusatzdaten bzw. Attributdaten angereichert, die für die Routenführung relevant sind. Beispiele für derartige Zusatzdaten sind Straßennamen, Straßentypen, Abbiegebeschränkungen, Beschilderungen sowie eine auf einer Straße zugelassene Höchstgeschwindigkeit. Anhand der Vektordaten kann eine Route eines Fahrzeuges berechnet werden, wobei mittels Ortung des Fahrzeuges, beispielsweise mittels eines GPS-Systems, die aktuelle Position des Fahrzeuges erkannt werden kann. Durch Vergleich der aktuell erfassten Position des Fahrzeuges und der berechneten Route kann eine Abweichung des Fahrzeuges von der vordefinierten Route bestimmt und das Fahrzeug direkt oder indirekt über den Nutzer entsprechend geleitet bzw. gelenkt werden. Für eine sinnvolle Navigation eines Fahrzeuges, insbesondere in einem Verkehrsnetz, sind relativ genaue Daten sowie eine ausreichende Menge an Zusatz- bzw. Attributdaten erforderlich.

Neben der Navigation für einzelne Fahrzeuge können die digitalen Kartendaten auch für die Routenplanung eines aus vielen Fahrzeugen bestehenden Fuhrparks verwendet werden. Weiterhin können die digitalen Kartendaten auch zur direkten Steuerung von autonom fahrenden Fahrzeugen benutzt werden. Ferner können derartige digitale Kartendaten auch zur Koordination von Hilfsmaßnahmen in Notfallgebieten eingesetzt werden.

Bei herkömmlichen Verfahren zur Erstellung von Vektordaten, die digitale Kartendaten umfassen, werden die Daten aus Ortho-Fotos bzw. Ortho-Luftaufnahmen gewonnen und aktualisiert. Ortho-Luftaufnahmen sind verzerrungsfreie und maßstabsgetreue Abbildungen der Erdoberfläche, die aus Luft- oder Satellitenbildern abgeleitet werden können. Die für die digitalen Kartendaten bzw. die Vektorkarte erforderlichen Attribut- bzw. Zusatzdaten werden herkömmlicherweise durch Abfahren der verschiedenen möglichen Routen bzw. Strecken ermittelt, d.h., es erfolgt eine Vor-Ort-Erfassung der Attributdaten durch am Projekt beteiligte Personen. Beim Abfahren der Routen bzw. Strecken werden üblicherweise Videoaufnahmen mittels einer Kamera aufgenommen, die anschließend gesichtet und manuell ausgewertet werden, um die notwendigen Attribut- bzw. Zusatzdaten zu gewinnen. Die Erfassung der Zusatz- bzw. Attributdaten über die Vektorkarte ist daher äußerst mühsam und zeitaufwendig. Darüber hinaus können bei der manuellen Auswertung der Videoaufnahmen bzw. der direkten Vor-Ort-Erfassung leicht Fehler oder Ungenauigkeiten auftreten. Ein Grund hierfür liegt in der Nutzung unterschiedlicher Kameras mit unterschiedlichen Kameraperspektiven sowie der ungenauen Ordnung bzw. Zuordnung der Daten aufgrund der Messung zu unterschiedlichen Zeitpunkten. Um die Aktualität des Kartenmaterials aufrechtzuerhalten, sind regelmäßige Kontrollen und Korrekturen erforderlich, die wiederum einen hohen Bearbeitungsaufwand mit sich führen.

Es ist daher eine Aufgabe der vorliegenden Erfindung, ein Verfahren zur Erstellung einer Vektorkarte zu schaffen, welches die oben genannten Nachteile vermeidet und insbesondere eine Vektorkarte mit einer hohen Genauigkeit bei gleichzeitig geringem manuellen Bearbeitungsaufwand liefert.

Diese Aufgabe wird erfindungsgemäß durch ein Verfahren mit den in Patentanspruch 1 und einem System mit den in Patentanspruch 8 angegebenen Merkmalen gelöst.

Die Erfindung schafft demnach ein Verfahren zur Erstellung einer Vektorkarte eines vorgegebenen Gebietes mit den Schritten:
Erzeugen von Ortho-Luftaufnahmen durch eine im Wesentlichen senkrecht zur Erdoberfläche ausgerichtete erste Kamera, die an ein unbemanntes, automatisiertes Fluggerät angebracht ist, das das vorgegebene Gebiet in einer hohen Flughöhe überfliegt,
Auswerten der Ortho-Luftaufnahmen zur Ermittlung mindestens eines in dem Gebiet befindlichen Infrastrukturnetzes, Berechnen einer Flugroute für das unbemannte autonome Fluggerät entlang des in dem Gebiet befindlichen ermittelten Infrastrukturnetzes,
Erzeugen von Detail-Luftaufnahmen des Infrastrukturnetzes entlang der berechneten Flugroute durch eine schräg zu der Erdoberfläche ausgerichtete zweite Kamera, die an dem unbemannten automatisierten Fluggerät angebracht ist, welches das in dem Gebiet befindliche Infrastrukturnetz in mindestens einer niedrigen Flughöhe überfliegt, und
Berechnen der Vektorkarte des Gebietes auf Basis der erzeugten Ortho-Luftaufnahmen und der erzeugten Detail-Luftaufnahmen.

Das erfindungsgemäße Verfahren bietet als einen Vorteil, dass eine Erstellung und manuelle Auswertung der Detail-Luftaufnahmen weitgehend überflüssig wird.

Die Erfindung bietet als weiteren Vorteil, dass die Erstellung einer Vektorkarte in sehr kurzer Zeit weitgehend automatisiert erfolgen kann.

Bei einer möglichen Ausführungsform des erfindungsgemäßen Verfahrens werden Attributdaten aus den erzeugten Detail-Luftaufnahmen des Infrastrukturnetzes extrahiert und georeferenziert.

Bei einer möglichen Ausführungsform des erfindungsgemäßen Verfahrens werden Knoten und/oder Kanten des in den Luftaufnahmen dargestellten Infrastrukturnetzes mit den georeferenzierten Attributdaten versehen.

Bei einer weiteren möglichen Ausführungsform des erfindungsgemäßen Verfahrens werden die mit Attributdaten versehenen Knoten und/oder Kanten zu der Vektorkarte des Gebietes zusammengesetzt.

Bei einer weiteren möglichen Ausführungsform des erfindungsgemäßen Verfahrens werden die in der hohen Flughöhe erzeugten Ortho-Luftaufnahmen entzerrt und georeferenziert.

Bei einer weiteren möglichen Ausführungsform des erfindungsgemäßen Verfahrens werden die Ortho-Luftaufnahmen und/oder die Detail-Luftaufnahmen jeweils in unterschiedlichen spektralen Frequenzbereichen erzeugt.

Bei einer möglichen Ausführungsform des erfindungsgemäßen Verfahrens handelt es sich bei dem ermittelten Infrastrukturnetz um ein Verkehrsnetz, insbesondere um ein Straßen- oder Schienenverkehrsnetz.

Bei einer weiteren möglichen Ausführungsform des erfindungsgemäßen Verfahrens handelt es sich bei dem ermittelten Infrastrukturnetz um ein Versorgungsnetz, insbesondere um ein Stromversorgungsnetz oder Wasserversorgungsnetz.:

Im Weiteren werden mögliche Ausführungsformen des erfindungsgemäßen Verfahrens und des erfindungsgemäßen Systems zur Erstellung einer Vektorkarte unter Bezugnahme auf die beigefügten Figuren näher erläutert.

Es zeigen:
- Fig. 1: eine schematische Darstellung zur Darstellung eines Ausführungsbeispiels eines erfindungsgemäßen Systems zur Erstellung einer Vektorkarte eines vorgegebenen Gebietes;
- Fig. 2: ein Blockschaltbild eines Ausführungsbeispiels eines bei dem erfindungsgemäßen System und dem erfindungsgemäßen Verfahren eingesetzten unbemannten automatisierten Fluggerätes;
- Fig. 3: ein Ablaufdiagramm zur Darstellung eines Ausführungsbeispiels des erfindungsgemäßen Verfahrens zur Erstellung einer Vektorkarte.

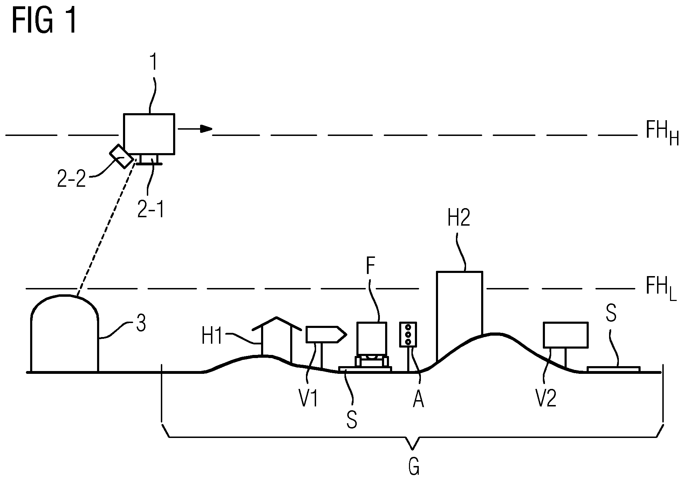

Fig. 1 zeigt schematisch ein Ausführungsbeispiel eines erfindungsgemäßen Systems zur Erstellung einer Vektorkarte, bei dem das erfindungsgemäße Verfahren eingesetzt wird. Das erfindungsgemäße Verfahren wird zur Erstellung einer Vektorkarte eines vorgegebenen Gebietes benutzt. Bei dem Gebiet kann es sich um ein beliebiges Gebiet der Erde oder eines anderen Planeten handeln. In dem Gebiet können sich verschiedenartigste Objekte eines Infrastrukturnetzes befinden.

Bei dem Infrastrukturnetz handelt es sich beispielsweise um ein Verkehrsnetz oder ein Versorgungsnetz. Das Verkehrsnetz ist beispielsweise ein Straßen- oder Schienenverkehrsnetz. Bei dem Versorgungsnetz kann es sich beispielsweise um ein Wasserversorgungsnetz oder ein Stromversorgungsnetz handeln. Die Infrastrukturnetze umfassen Knoten und/oder Kanten. Beispielsweise enthält ein Straßenverkehrsnetz Knoten, beispielsweise Kreuzungen, sowie Kanten, insbesondere Straßen oder Wege. Die Objekte des Infrastrukturnetzes sind teilweise mit Schildern, beispielsweise Verkehrsschildern, versehen.

Bei diesen Verkehrsschildern kann es sich um Verkehrsschildsymbole, die beispielsweise Sackgassen oder Vorfahrtsstraßen kennzeichnen, oder um Namensschilder handeln. Die Namensschilder geben beispielsweise an Ortseinfahrten den Namen des jeweiligen Ortes an. Weiterhin geben Straßenverkehrsschilder an Fahrzeugkreuzungen Straßennamen an. Entlang der Kanten des Infrastrukturnetzes können sich verschiedene Objekte befinden, beispielsweise Verkehrsschilder, Verkehrsleiteinrichtungen, insbesondere Ampeln oder dergleichen, sowie Wohn- und Arbeitsgebäude. Die entlang der Kante bzw. Straße errichteten Gebäude verfügen über Hausnummern, wobei typischerweise Gebäude an einer ersten Straßenseite mit geraden Hausnummern und Gebäude auf der gegenüberliegenden zweiten Straßenseite mit ungeraden Hausnummern versehen sind. Die Haustürnummern sind in der Regel entlang der Kante bzw. Straße linear ansteigend. Die in dem Verkehr befindlichen Objekte des Infrastrukturnetzes sowie der daran angrenzenden bzw. anliegenden Objekte befinden sich auf dem Boden bzw. der Erdoberfläche und weisen unterschiedliche Höhen bzw. Bauhöhen auf. So weisen Verkehrsleiteinrichtungen, beispielsweise Ampeln oder Verkehrsschilder, in der Regel eine Höhe von weniger als 10 m auf. Die an der Straße befindlichen Gebäude können unterschiedliche Höhen aufweisen, wobei Wohnhäuser in der Regel eine Höhe von weniger als 20 m besitzen, während Hochhäuser auch Höhen über 100 m aufweisen können. Weiterhin können sich an und in dem Infrastrukturnetz auch bewegliche Objekte befinden, insbesondere Straßenfahrzeuge oder Schienenfahrzeuge.

Fig. 1 zeigt stark vereinfacht und exemplarisch ein bei dem erfindungsgemäßen System eingesetztes unbemanntes automatisiertes Fluggerät 1, welches in einer hohen Flughöhe FH_{H} ein vorgegebenes Gebiet G überfliegt, in dem sich verschiedene Objekte mindestens eines Infrastrukturnetzes befinden können. Diese Objekte befinden sich auf der Erd- bzw. Planetenoberfläche in einem vorgegebenen Gebiet G. Bei dem in Fig. 1 dargestellten Beispiel fährt ein Fahrzeug F als bewegliches Fahrzeug auf einer ersten Straße S, die zu einer Kreuzung führt, an der ein Verkehrsschild V1 angebracht ist und den Fahrer des Fahrzeuges F dazu anweist, in eine Richtung abzubiegen. Darüber hinaus befindet sich an der Kreuzung bzw. Knoten als Objekt eine Verkehrsampel A. Ein weiteres Verkehrsschild V2 mit dem Namen einer Ortschaft befindet sich an einer weiteren Straße S. Als weitere Objekte entlang der Straße sind ein Privathaus H1 dargestellt sowie ein Hochhaus oder Mehrfamilienhaus H2. Die in Fig. 1 dargestellten Straßen S bilden jeweils eine Kante innerhalb eines Verkehrsinfrastrukturnetzes und verbinden zwei Knoten des Verkehrsinfrastrukturnetzes, beispielsweise zwei Kreuzungen, miteinander. Auf Basis der an der Straße bzw. Kante vorhandenen Objekten, insbesondere den Verkehrsschildern V1, V2, können Attribut- bzw. Zusatzdaten gewonnen werden. Weiterhin ist es möglich, aus den an den Straßen S bzw. Kanten vorhandenen weiteren Objekten, beispielsweise Gebäuden oder Verkehrsampeln bzw. Verkehrsleiteinrichtungen, weitere Attributdaten zu gewinnen. Buchstaben bzw. Zeichen, die sich auf Verkehrsschildern, Namensschildern oder dergleichen befinden, können automatisch erkannt werden, um entsprechende Attributdaten zu erzeugen.

Wie in Fig. 1 dargestellt, verfügt das unbemannte automatisierte Fluggerät 1 über zwei Kameras 2-1, 2-2. Die erste Kamera 2-1 ist vorzugsweise im Wesentlichen senkrecht zu der Erdoberfläche ausgerichtet. Bei einer möglichen Ausführungsform handelt es sich bei der ersten Kamera 2-1 um eine Weitwinkelkamera. Diese erste Kamera 2-1 ist geeignet, Ortho-Luftaufnahmen des Gebietes aus einer hohen Flughöhe FH_{H} zu machen. Das unbemannte autonome Fluggerät 1 verfügt ferner über eine zweite Kamera 2-2, die schräg zu der Erdoberfläche ausgerichtet ist. Die zweite Kamera 2-2 ist geeignet, Detail-Luftaufnahmen des Infrastrukturnetzes aus mindestens einer relativ niedrigen Flughöhe FH_{L} zu liefern.

Die hohe Flughöhe FH_{H} liegt bei einer möglichen Ausführungsform in einem Bereich von 300 bis 2000 m. Die niedrige Flughöhe FH_{L} liegt je nach Anwendungsfall in einem Bereich von 0 bis zu einem einstellbaren Maximalwert von beispielsweise 250 m. Bei einer möglichen Ausführungsform wird die niedrige Flughöhe FH_{L} derart gewählt, dass sie über der Höhe des sich innerhalb des Gebietes G befindlichen höchsten Objektes liegt. Bei dem in Fig. 1 dargestellten Beispiel beträgt die Flughöhe FH_{L} mindestens die Höhe des hohen Bürogebäudes H2. Bei einer alternativen bevorzugten Ausführungsform wird die Flughöhe FH_{L} unabhängig von der Höhe der in dem Gebiet G befindlichen Objekte derart gewählt, dass die Detail-Luftaufnahmen, welche durch die zweite Kamera 2-2 geliefert werden, eine derart hohe Auflösung bieten, dass Attributdaten des Infrastrukturnetzes einfach extrahiert werden können.

Bei dem erfindungsgemäßen Verfahren bzw. System werden zunächst Ortho-Luftaufnahmen durch die senkrecht zu der Erdoberfläche ausgerichtete erste Kamera 2-1 erzeugt, wobei die Kamera 2-1 an dem unbemannten automatisierten Fluggerät 1 angebracht ist, welches das vorgegebene Gebiet G in der hohen Flughöhe FH_{H} überfliegt. Die erzeugten Ortho-Luftaufnahmen werden zunächst zur Ermittlung mindestens eines in dem Gebiet G befindlichen Infrastrukturnetzes ausgewertet. Bei diesem Infrastrukturnetz handelt es sich beispielsweise um ein Verkehrsnetz, insbesondere ein Straßenverkehrsnetz oder ein Schienenverkehrsnetz. Weiterhin kann es sich bei dem Infrastrukturnetz um ein Versorgungsnetz, beispielsweise ein Stromversorgungsnetz oder ein Wasserversorgungsnetz, handeln.

Nach Auswertung der Ortho-Luftaufnahmen wird eine Flugroute für das unbemannte autonome Fluggerät 1 entlang des in dem Gebiet G befindlichen ermittelten Infrastrukturnetzes berechnet. Sobald die Flugroute entlang des ermittelten Infrastrukturnetzes errechnet worden ist, vermindert das unbemannte automatisierte Fluggerät 1 seine Flughöhe und überfliegt das Gebiet G entlang der berechneten Flugroute in mindestens einer niedrigen Flughöhe FH_{L}. Dabei liefert die zweite schräg zu der Erdoberfläche ausgerichtete Kamera 2-2 Detail-Luftaufnahmen des Infrastrukturnetzes entlang der berechneten Flugroute. Auf Basis der durch die erste Kamera 2-1 erzeugten Ortho-Luftaufnahmen und der durch die zweite Kamera 2-2 erzeugten Detail-Luftaufnahmen wird schließlich die Vektorkarte des Gebietes G berechnet. Dabei werden Attributdaten aus den von der zweiten Kamera 2-2 gelieferten Detail-Luftaufnahmen des Infrastrukturnetzes extrahiert und georeferenziert. Knoten und/oder Kanten des in den Ortho-Luftaufnahmen dargestellten Infrastrukturnetzes werden mit den georeferenzierten Attributdaten versehen. Die mit den Attributdaten versehenen Ortho-Luftaufnahmen werden anschließend zu der Vektorkarte des Gebietes G zusammengesetzt. Bei einer möglichen Ausführungsform werden die in der hohen Flughöhe FH_{H} erzeugten Ortho-Luftaufnahmen zunächst entzerrt und anschließend georeferenziert. Die bei den Ortho-Luftaufnahmen entstehenden Verzerrungen einer fotografischen Zentralprojektion sowie Verzerrungen durch die Höhenunterschiede des Geländes bzw. aufgrund der Erdkrümmung werden durch optische Projektionsmethoden vorzugsweise orthoreferenziert. Bei einer möglichen Ausführungsform werden Digitalaufnahmen anhand von digitalen Geländemodellen umgerechnet und anhand von Punkten mit bekannten Koordinaten georeferenziert. Bei den aus Ortho-Luftaufnahmen bzw. Senkrecht-Aufnahmen erzeugten Fotos bzw. Ortho-Bildern werden vorzugsweise die dem Bildzentrum nahen Bereiche verwendet, da sie weniger verzerrt werden als weiter vom Projektionszentrum entfernt liegende Punkte. Die Verzerrung wird dabei umso geringer, je höher sich die Kamera 2-1 über dem Gelände G befindet. Die übrigen Bilder werden vorzugsweise derart entzerrt, dass die Geometrie überall dem in einer Karte vorgegebenen Maßstab in orthogonaler Grundrissprojektion entspricht. Die Kamera 2-1 wird vorzugsweise lotrecht nach unten ausgerichtet. Weiterhin wird das unbemannte autonome Fluggerät 1 vorzugsweise derart gesteuert, dass es während der Erzeugung der Ortho-Luftaufnahmen keine Kippbewegungen macht. Weiterhin werden vorzugsweise Verzerrungen, die durch Geländehöhenunterschiede entstehen, beseitigt. Dies kann mithilfe eines für das Gelände vorhandenen Höhen-Datenmodells geschehen.

Bei einer möglichen Ausführungsform werden die Ortho-Luftaufnahmen der ersten Kamera 2-1 und die Detail-Luftaufnahmen der zweiten Kamera 2-2 im gleichen spektralen Frequenzbereich erzeugt, beispielsweise im sichtbaren Bereich. Bei einer alternativen Ausführungsform werden die Ortho-Luftaufnahmen und die Detail-Luftaufnahmen in unterschiedlichen spektralen Frequenzbereichen erzeugt, beispielsweise im sichtbaren und im Infrarotbereich.

Die Berechnung der ersten Flugroute des unbemannten automatisierten Fluggerätes 1 in der hohen Flughöhe FH_{H} zur Erzeugung der Ortho-Luftaufnahmen erfolgt bei einer möglichen Ausführungsform durch eine Berechnungseinheit des Fluggerätes 1. Alternativ kann die erste Flugroute zur Erzeugung der Ortho-Luftaufnahmen durch einen Server einer Basisstation 3 berechnet und über eine drahtlose Schnittstelle an das Fluggerät 1 übertragen werden. Weiterhin kann die zweite Flugroute des unbemannten autonomen Fluggerätes 1 in der niedrigen Flughöhe FH_{L} zur Erzeugung der Detail-Luftaufnahmen bei einer möglichen Ausführungsform durch eine Berechnungseinheit des unbemannten automatisierten Fluggerätes 1 erfolgen. Alternativ erfolgt die Berechnung der Flugroute zur Erzeugung der Detail-Luftaufnahmen durch einen Server bzw. eine Berechnungseinheit der Basisstation 3, welche die berechnete Flugroute zur Erzeugung der Detail-Luftaufnahmen über eine drahtlose Funkschnittstelle an das Fluggerät 1 überträgt. Bei einer möglichen Ausführungsform verfügt das unbemannte automatisierte Fluggerät über eine Mobilfunkschnittstelle, um Daten mit der Basisstation 3 bidirektional auszutauschen.

Bei einer möglichen Ausführungsform wird zunächst das Gebiet G festgelegt, für welches eine Vektorkarte erstellt werden soll. Anschließend wird bestimmt bzw. festgelegt, welches bzw. welche Infrastrukturnetze erfasst werden sollen. Beispielsweise wird festgelegt, dass die Vektorkarte ein Straßenverkehrsnetz innerhalb des Gebietes G wiedergeben soll. Bei einer möglichen Ausführungsform kann die Vektorkarte auch mehrere verschiedene Infrastrukturnetze wiedergeben, beispielsweise ein Straßenverkehrsnetz und ein Energieversorgungsnetz. Sobald das Gebiet G sowie das Infrastrukturnetz festgelegt worden sind, kann auf Basis von bereits vorhandenem Kartenmaterial eine erste Flugroute zur Erzeugung von Ortho-Luftaufnahmen berechnet werden. Die berechnete erste Flugroute kann in einem Datenspeicher abgelegt werden, auf den eine Flugsteuerung des Fluggerätes 1 Zugriff hat. Anschließend steigt das unbemannte autonome Fluggerät 1 vom Boden auf und überfliegt das Gebiet G in der hohen Flughöhe FH_{H} entlang der berechneten ersten Flugroute zur Erzeugung von Ortho-Luftaufnahmen aus großer Höhe mithilfe der im Wesentlichen senkrecht zur Erdoberfläche ausgerichteten ersten Kamera 2-1. Die Ortho-Luftaufnahmen werden entzerrt und zu einem Gesamtbild zusammengesetzt, wobei fortlaufend die aktuelle Position des Fluggerätes 1 erfasst und die Ortho-Luftaufnahmen automatisch georeferenziert werden. Anschließend erfolgt eine Auswertung der Ortho-Luftaufnahmen entweder direkt durch eine Berechnungseinheit des unbemannten automatisierten Fluggerätes 1 oder durch einen zentralen Server, der sich beispielsweise in einer Basisstation 3 befindet. Mithilfe einer Bildanalyse können wesentliche Strukturen, insbesondere Bewuchs, Bebauung oder im Gebiet verlaufende Straßen, identifiziert und das Infrastrukturnetz in Vektordaten überführt werden. Teilbereiche können erkannt und entsprechende Begrenzungen, beispielsweise eine Stadtgrenze, ermittelt werden.

In einem weiteren Schritt wird aus dem erkannten Infrastrukturnetz, beispielsweise einem Straßennetz, eine weitere Flugroute mithilfe einer Berechnungseinheit berechnet, die alle notwendigen Knoten und Kanten des Infrastrukturnetzes enthält. Beispielsweise umfasst die zweite Flugroute alle Straßen und Kreuzungspunkte eines Straßenverkehrsnetzes innerhalb des Gebietes G. Sobald die zweite Flugroute berechnet worden ist, wechselt das unbemannte automatisierte Fluggerät 1 von der hohen Flughöhe FH_{H} zu der niedrigen Flughöhe FH_{L} und überfliegt das Gebiet G in mindestens einer niedrigen Flughöhe. Dabei erfasst die zweite Kamera 2-2 entlang der berechneten niedrigen Flugroute Details von Objekten des Infrastrukturnetzes aus einer Vogelperspektive. Die erzeugten Detail-Luftaufnahmen werden bei einer möglichen Ausführungsform über eine drahtlose Schnittstelle des Fluggerätes 1 an einen Server einer Basisstation 3 übertragen und dort ausgewertet. Alternativ erfolgt die Auswertung der Detail-Luftaufnahmen direkt durch eine Berechnungseinheit innerhalb des Fluggerätes 1, vorzugsweise in Echtzeit. Bei der Auswertung der Detail-Luftaufnahmen werden Attributdaten aus den Detail-Luftauf-nahmen des Infrastrukturnetzes extrahiert und georeferenziert. Bei einer möglichen Ausführungsform werden die zeitlichen Abstände zwischen dem Zeitpunkt der Erstellung der Ortho-Luftaufnahmen und der Detail-Luftaufnahmen minimiert bzw. geringgehalten, um Fehler bzw. Abweichungen zu reduzieren. Bei einer möglichen Ausführungsform wird das Gebiet G zunächst in Teilflächen unterteilt und das Verfahren für jede Teilfläche durchgeführt, wobei das Fluggerät 1 zwischen der hohen Flughöhe FH_{H} und der niedrigen Flughöhe FH_{L} für jede Teilfläche wechselt.

Zur Korrektur bekannter Vektordaten kann mit dem erfindungsgemäßen Verfahren und der erzeugten Ortho-Luftaufnahmen zunächst eine Übereinstimmung bezüglich der bestehenden Vektordaten geprüft und bei bestehenden Abweichungen eine Korrektur vorgenommen werden. Basierend auf diesen Daten oder den bereits vorhandenen Daten kann die Flugroute berechnet und die Datenerfassung durchgeführt werden.

Bei einer möglichen Ausführungsform des erfindungsgemäßen Verfahrens bzw. Systems können lokal eingesetzte Fluggeräte an ein zentrales Planungs- und Datenerfassungssystem angebunden sein. Bei dieser Ausführungsform können verschiedene Fluggeräte 1 für verschiedene Gebiete eingesetzt werden. Das zentrale Planungs- und Datenerfassungssystem erfasst die Positionen für die in verschiedenen Gebieten eingesetzten unbemannten automatisierten Fluggeräte 1 und berechnet bei einer möglichen Ausführungsform die Flugrouten der Fluggeräte 1. Weiterhin kann das zentrale Planungs- und Datenerfassungssystem die erfassten Geodaten der verschiedenen Fluggeräte 1 empfangen, welche bei einer möglichen Ausführungsform hinsichtlich ihrer Plausibilität überprüft werden. Die hinsichtlich ihrer Plausibilität erfolgreich geprüften Daten werden anschließend als gültige Daten in den globalen Kartenbestand des Planungs- und Datenerfassungssystems transferiert bzw. übertragen.

Bei einer möglichen Ausführungsform wird die Position des Fluggerätes 1 und ein Datum eines letzten Kontrollfluges zur Berechnung der abzufliegenden Flugrouten berücksichtigt. Bei einer möglichen Ausführungsform hat das zentrale Planungs- und Datenerfassungssystem auch Zugriff zu Einsatzplanungsdaten, beispielsweise auf Einsatzplanungsdaten von Straßenbauämtern oder ähnlichen Stellen. Von diesen Datenquellen kann das Planungs- und Datenerfassungssystem Informationen bzw. Daten erhalten, an welchen Stellen innerhalb des Gebietes G aktuell Veränderungen im Infrastrukturnetz, beispielsweise dem Straßennetz, vorgenommen werden bzw. an welchen Stellen Straßenbaumaßnahmen bereits abgeschlossen wurden. Bei einer weiteren möglichen Ausführungsform können zur Verifikation der erfassten Daten sowie zur Aktualitätsprüfung der Daten Testflugrouten berechnet werden, die mittels des unbemannten autonomen Fluggerätes 1 abgeflogen werden, wobei die dabei erzeugten Luftaufnahmen an einen zentralen Server der Basisstation 3 übertragen werden können. Im Gegensatz zur Verifikation mittels herkömmlicher Fahrzeuge und Testfahrern erfordert dies keine manuelle Steuerung. Abweichungen der Daten von der erfassten Realität wirken sich nicht auf die Sicherheit aus, da das Fluggerät 1 nicht an Straßen oder die Einhaltung von Straßenverkehrsregeln gebunden ist.

Bei einer möglichen Ausführungsform kann das bei dem erfindungsgemäßen System verwendete unbemannte autonome Fluggerät 1 weitere Aufgaben bzw. Dienste erfüllen, insbesondere wenn eine Erstellung von Vektorkarten zu diesem Zeitpunkt nicht notwendig ist bzw. eine geringere Priorität aufweist. Beispielsweise kann das unbemannte autonome Fluggerät 1 aus einem Betriebsmodus zur Erstellung einer Vektorkarte in einen anderen Betriebsmodus umgeschaltet werden, in dem es eine andere Funktion erfüllt. Das Umschalten des unbemannten autonomen Fluggerätes 1 zwischen verschiedenen Betriebsmodi kann durch ein Steuersignal erfolgen, das beispielsweise von der Basisstation 3 über eine drahtlose Schnittstelle an das unbemannte autonome Fluggerät 1 ausgesendet wird. Wird beispielsweise innerhalb des Gebietes in einem Verkehrsnetz ein Stau erkannt, kann das unbemannte Fluggerät 1, welches gerade Daten für eine Vektorkarte erfasst, in einen anderen Betriebsmodus umgeschaltet werden, bei dem es hilft, die Stauursache zu erkennen oder den Verkehrsfluss innerhalb des Infrastrukturnetzes zu optimieren. Weiterhin kann das unbemannte Fluggerät 1 ferner in einen Betriebsmodus umgeschaltet werden, bei dem es ein Objekt innerhalb des Gebietes G, beispielsweise einen Schwertransporter, entlang des Infrastrukturnetzes in einer niedrigen Flughöhe FH_{L} begleitet. Während das unbemannte autonome Fluggerät 1 das Objekt, beispielsweise ein Fahrzeug F, das sich auf einer Straße S innerhalb des Gebietes G bewegt, begleitet, kann es zusätzlich Luftaufnahmen bzw. Daten an eine Basisstation 3 übertragen, welche dahingehend ausgewertet werden können, die Sicherheit bei der Bewegung des Fahrzeuges F entlang der Straße S zu erhöhen. Während das unbemannte autonome Fluggerät 1 das bewegliche Objekt, beispielsweise das Fahrzeug F, innerhalb des Gebietes G begleitet, kann es zusätzlich Luftaufnahmen zur Erstellung bzw. Verifizierung einer Vektorkarte mithilfe seiner Kameras 2-1, 2-2 erzeugen.

Weitere mögliche Dienste, die das Fluggerät 1 leistet, sind die Sicherung von Beweismaterial bei Unfällen oder die Erkennung von Kältebrücken und Schwachstellen an Gebäuden mittels einer Wärmebildkamera. Die verschiedenen Aufgaben bzw. Dienste können verschiedene Prioritäten aufweisen. Bei einer möglichen Ausführungsform erfolgt eine Priorisierung der von dem Fluggerät 1 durchgeführten Aufgaben in Abhängigkeit der den Aufgaben bzw. Diensten zugewiesenen Prioritäten und der aktuellen Position des Fluggerätes 1.

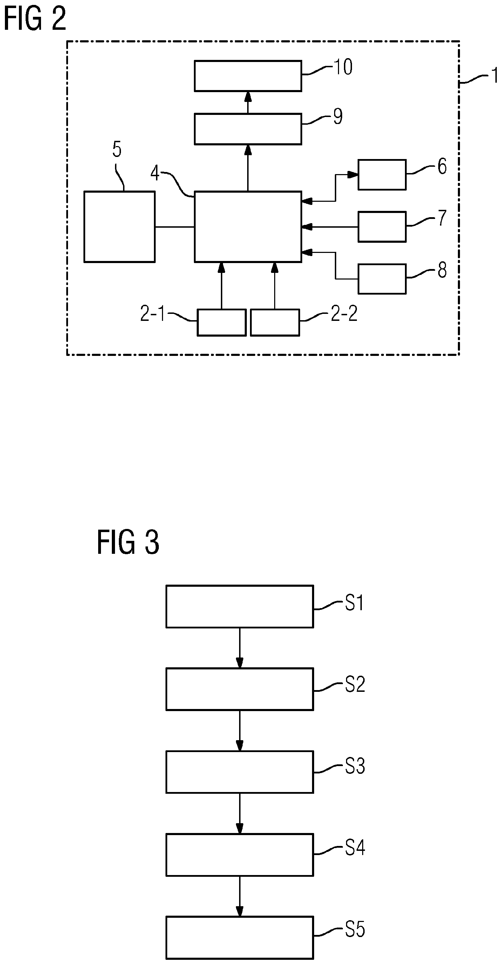

Fig. 2 zeigt ein Blockschaltbild eines möglichen Ausführungsbeispiels eines bei dem erfindungsgemäßen System und Verfahren eingesetzten unbemannten autonomen Fluggerätes 1. Das Fluggerät 1 weist eine erste Kamera 2-1 auf, welche Ortho-Luftaufnahmen des vorgegebenen Gebietes G in einer hohen Flughöhe FH_{H} liefert. Bei der ersten Kamera 2-1 kann es sich beispielsweise um eine Weitwinkelkamera handeln. Die Kamera 2-1 wird vorzugsweise im Wesentlichen senkrecht zu der Erdoberfläche ausgerichtet. Das unbemannte autonome Fluggerät 1 verfügt ferner über eine zweite Kamera 2-2, welche Detail-Luftaufnahmen eines in dem vorgegebenen Gebiet G befindlichen Infrastrukturnetzes entlang einer berechneten zweiten Flugroute in niedriger Flughöhe liefert. Bei einer bevorzugten Ausführungsform kann die schräge Ausrichtung der zweiten Kamera 2-2 relativ zu der Erdoberfläche während des Betriebes des Fluggerätes 1 eingestellt werden. Beispielsweise kann der Winkel zwischen dem in horizontaler Richtung fliegenden Fluggerät 1 und einem am Boden befindlichen Objekt des Infrastrukturnetzes durch Bewegung der zweiten Kamera 2-2 während des Fluges eingestellt werden. Die Flugroute des unbemannten automatisierten Fluggerätes 1 entlang des Infrastrukturnetzes, beispielsweise des Straßennetzes, wird automatisch auf Basis der durch die erste Kamera 2-1 gelieferten Ortho-Luftaufnahmen berechnet. Bei einer möglichen Ausführungsform des Fluggerätes 1 weist dieses eine Berechnungseinheit 4 auf, welche die Flugroute entlang des in dem Gebiet G befindlichen Infrastrukturnetzes auf Basis der durch die erste Kamera 2-1 gelieferten Ortho-Luftaufnahmen berechnet. Bei der in Fig. 2 dargestellten Ausführungsform weist das Fluggerät 1 ferner eine Kommunikationsschnittstelle 5 auf, über welche das unbemannte automatisierte Fluggerät 1 drahtlos mit der Basisstation 3 bidirektional kommuniziert. Bei einer möglichen Ausführungsform handelt es sich bei der Kommunikationsschnittstelle 5 um eine Mobilfunkschnittstelle.

Bei einer möglichen Ausführungsform weist die Basisstation 3 eine Berechnungseinheit bzw. einen Server auf, der die über die Kommunikationsschnittstelle 5 des unbemannten automatisierten Fluggerätes 1 empfangenen Ortho-Luftaufnahmen zur Berechnung einer Flugroute entlang des Infrastrukturnetzes auswertet und die berechnete Flugroute an das unbemannte automatisierte Fluggerät 1 zurücküberträgt. Die beiden Flugrouten, nämlich die erste Flugroute zur Erzeugung der Ortho-Luftaufnahmen und die zweite Flugroute zur Erzeugung der Detail-Luftaufnahmen, sind bei einer bevorzugten Ausführungsform in einem Datenspeicher 6 gespeichert. Bei dem in Fig. 2 dargestellten Ausführungsbeispiel verfügt das Fluggerät 1 ferner über eine GPS-Einheit 7 zur Erfassung einer aktuellen Position des Fluggerätes 1 über dem Gebiet G und zur Georeferenzierung der von den beiden Kameras 2-1, 2-2 gelieferten Ortho- und Detail-Luftaufnahmen. Ferner verfügt das Fluggerät 1 bei dem in Fig. 2 dargestellten Ausführungsbeispiel über eine Höhenmesseinheit 8 zur Erfassung der aktuellen Flughöhe des Fluggerätes 1 über dem Gebiet G.

Das Fluggerät 1 enthält ferner eine Flugsteuerungseinheit 9, welche das unbemannte automatisierte Fluggerät 1 entlang der berechneten Flugroute in der hohen und/oder niedrigen Flughöhe über das Gebiet G lenkt, indem es eine Rotorantriebseinheit 10 des Fluggerätes 1 entsprechend der Flugroute ansteuert. Die Rotorantriebseinheit 10 enthält einen Elektromotor, welcher einen Rotor mit mehreren Rotorblättern antreibt. Bei einer möglichen Ausführungsform steuert die Flugsteuerungseinheit 9 auch Fluglenkeinrichtungen an, beispielsweise Aktoren, welche die Flugrichtung des Fluggerätes 1 entsprechend der Flugroute ändern. In alternativen Ausführungsformen weist das Fluggerät 1 andere Flugantriebe auf, beispielsweise Triebwerke. Raketentriebwerke werden eingesetzt, falls keine Luftatmosphäre vorhanden ist. Die Fluggeräte 1 können zentral oder verteilt gewartet und aufgeladen werden.

Bei einer möglichen Ausführungsform extrahiert die in Fig. 2 dargestellte Berechnungseinheit 4 des unbemannten automatisierten Fluggerätes 1 aus den in der niedrigen Flughöhe durch die zweite Kamera 2-2 gelieferten Detail-Luftaufnahmen Attributdaten und georeferenziert diese beispielsweise mittels deren von der GPS-Einheit 7 oder einer anderen Einheit gelieferten Positionsdaten. Bei einer alternativen Ausführungsform werden die von der zweiten Kamera 2-2 gelieferten Detail-Luftaufnahmen zunächst über die Kommunikationsschnittstelle 5 an einen Server der Basisstation 3 übertragen und dort ausgewertet, um die Attributdaten zu extrahieren und zu georeferenzieren. Bei einer weiteren möglichen Ausführungsform des erfindungsgemäßen Fluggerätes 1 versieht die Berechnungseinheit 4 des unbemannten automatisierten Fluggerätes 1 die in den Ortho-Luftaufnahmen dargestellten Knoten oder Kanten des Infrastrukturnetzes mit den aus den Detail-Luftaufnahmen extrahierten und georeferenzierten Attributdaten und setzt die mit den Attributdaten versehenen Knoten und Kanten zu der Vektorkarte des Gebietes G zusammen. Bei einer alternativen Ausführungsform werden die in den Ortho-Luftaufnahmen dargestellten Knoten oder Kanten des Infrastrukturnetzes durch eine Berechnungseinheit 4 der Basisstation 3 mit den aus den Detail-Luftaufnahmen extrahierten und georeferenzierten Attributdaten versehen und anschließend werden die mit den Attributdaten versehenen Knoten und Kanten durch den Server bzw. die Berechnungseinheit 4 der Basisstation 3 zu der Vektorkarte des Gebietes G zusammengesetzt.

Fig. 3 zeigt ein Ablaufdiagramm zur Darstellung eines Ausführungsbeispiels des erfindungsgemäßen Verfahrens zur Erstellung einer Vektorkarte.

In einem Schritt S1 werden zunächst Ortho-Luftaufnahmen durch eine im Wesentlichen senkrecht zu der Erdoberfläche ausgerichtete erste Kamera 2-1 erzeugt, die an ein unbemanntes automatisiertes Fluggerät 1 angebracht ist, welches das vorgegebene Gebiet G in einer hohen Flughöhe FH_{H} gemäß einer ersten Flugroute überfliegt.

In einem weiteren Schritt S2 werden die Ortho-Luftaufnahmen zur Ermittlung mindestens eines in dem Gebiet G befindlichen Infrastrukturnetzes ausgewertet.

In einem weiteren Schritt S3 wird eine zweite Flugroute für das unbemannte autonome Fluggerät 1 entlang des in dem Gebiet G befindlichen ermittelten Infrastrukturnetzes berechnet.

In einem weiteren Schritt S4 werden Detail-Luftaufnahmen des Infrastrukturnetzes entlang der berechneten zweiten Flugroute durch eine schräg zu der Erdoberfläche ausgerichtete zweite Kamera 2-2 erzeugt, die ebenfalls an dem unbemannten automatisierten Fluggerät 1 angebracht ist, welches das in dem Gebiet G befindliche Infrastrukturnetz in mindestens einer niedrigen Flughöhe FH_{L} überfliegt.

In einem weiteren Schritt S5 wird die Vektorkarte des Gebietes G auf Basis der erzeugten Ortho-Luftaufnahmen und der erzeugten Detail-Luftaufnahmen berechnet.

Bei einer möglichen Ausführungsform wird das in Fig. 3 dargestellte Verfahren mit den Schritten S1 bis S5 durch das unbemannte automatisierte Fluggerät 1 autonom durchgeführt. Bei einer möglichen Ausführungsform weist die Berechnungseinheit 4 des unbemannten autonomen Fluggerätes 1 einen oder mehrere Mikroprozessoren auf, die ein entsprechendes Steuerprogramm ausführen, um das erfindungsgemäße Verfahren durchzuführen. Dieses Programm kann sich in einem Programmspeicher des Fluggerätes 1 befinden.

Der Einsatz des unbemannten automatisierten Fluggerätes 1 bietet den besonderen Vorteil, dass die Erfassung der Ortho-Luftaufnahmen und der Detail-Luftaufnahmen zusammengefasst werden können. Dadurch können die Luftaufnahmen automatisiert und ohne manuelle Bearbeitungsschritte zueinander korreliert bzw. zueinander in Beziehung gesetzt werden, da die Abweichungen zwischen den Luftaufnahmen der ersten Kamera 2-1 und der zweiten Kamera 2-2 vorab bekannt sind. Durch Kombination der auf diese Weise zusammengefassten Daten bzw. Luftaufnahmen wird eine automatisierte Auswertung der Daten erleichtert.

Weitere Ausführungsvarianten des erfindungsgemäßen Verfahrens und Systems sind möglich. So können bei einer möglichen Ausführungsform mehrere unbemannte automatisierte Fluggeräte 1 eingesetzt werden, welche verschiedene Teilflächen des Gebietes G zur Erzeugung von Luftaufnahmen abfliegen. Weiterhin können auch ein erstes und ein zweites unbemanntes automatisiertes Fluggerät eingesetzt werden, wobei das erste unbemannte automatisierte Fluggerät das Gebiet G in einer hohen Flughöhe FH_{H} überfliegt, um die Ortho-Luftaufnahmen zu erzeugen, und das andere unbemannte automatisierte Fluggerät das Gebiet G in einer niedrigen Flughöhe FH_{L} überfliegt, um die zugehörigen Detail-Luftaufnahmen zu erzeugen. Die erzeugten Ortho-Luftaufnahmen und die Detail-Luftaufnahmen können von den beiden in unterschiedlicher Höhe fliegenden unbemannten automatisierten Fluggeräten 1 an eine gemeinsame Basisstation 3 übertragen werden. Bei einer bevorzugten Ausführungsform können die beiden unbemannten automatisierten Fluggeräte 1 miteinander über eine Kommunikationsschnittstelle kommunizieren, sodass die beiden Flugrouten der beiden Fluggeräte 1 aufeinander abgestimmt werden können. Diese Ausführungsform bietet den Vorteil, dass die Ortho-Luftaufnahmen und die Detail-Luftaufnahmen nahezu zeitgleich erzeugt werden können. Ein weiterer Vorteil besteht darin, dass die unbemannten autonomen Fluggeräte 1 sich im Wesentlichen in einer konstanten Flughöhe bewegen können, da kein Flughöhenwechsel notwendig ist.

Bei einer möglichen Ausführungsform überfliegt das unbemannte automatisierte Fluggerät 1 das Gebiet G entsprechend der berechneten Flugroute mit einer nahezu konstanten Geschwindigkeit. Bei einer möglichen Ausführungsform überfliegt das unbemannte automatisierte Fluggerät 1 das Gebiet G in der niedrigen Flughöhe FH_{L} mit einer variablen Geschwindigkeit, die sich in Abhängigkeit von der in dem Gebiet G befindlichen Objekte ändern kann. Nähert sich beispielsweise das unbemannte automatisierte Fluggerät 1 einem relevanten Objekt entlang des Infrastrukturnetzes, beispielsweise einem Verkehrsschild V2, kann es seine Geschwindigkeit zur Erfassung der Detail-Luftaufnahme verlangsamen, beispielsweise um einen auf dem Verkehrsschild V2 befindlichen Schriftzug genau zu erfassen. Zeichen, insbesondere Buchstaben oder Zahlen, werden vorzugsweise automatisch erkannt. Ferner kann eine Plausibilitätsprüfung der erkannten Zeichen erfolgen.

Bei einer möglichen Ausführungsform befindet sich die Basisstation 3 an einer festen Position, beispielsweise in einem Gebäude. Bei einer alternativen Ausführungsform befindet sich die Basisstation in einem Fahrzeug, welches am Rand des zu erfassenden Gebietes bzw. innerhalb des Gebietes G positioniert wird. Hierdurch wird die bidirektionale Signalübertragung zwischen der Kommunikationsschnittstelle 5 des unbemannten automatisierten Fluggerätes 1 der Berechnungseinheit 4 bzw. dem Server der Basisstation 3 erleichtert.

Bei einer weiteren möglichen Ausführungsform wird bei der Berechnung der Flugroute des unbemannten automatisierten Fluggerätes 1 zusätzlich auf Wetterdaten eines Wetterdienstes zugegriffen. Beispielsweise wird die hohe Flughöhe FH_{H} in Abhängigkeit von zu erwartenden Wolkenbildungen in dem Gebiet G eingestellt. Dabei bewegt sich das unbemannte automatisierte Fluggerät 1 vorzugsweise unterhalb der in dem Gebiet G befindlichen Wolkendecke. Bei einer weiteren möglichen Ausführungsform überträgt das unbemannte automatisierte Fluggerät 1 die Daten der Luftaufnahmen und sonstige Daten nicht direkt zu der Basisstation 3, sondern über eine Relaisstation, beispielsweise über eine Satellitenverbindung.

Bei einer weiteren möglichen Ausführungsform bewegt sich das unbemannte automatisierte Fluggerät 1 in der niedrigen Flughöhe FH_{L} zwischen den in dem Gebiet G befindlichen Objekten, beispielsweise Gebäuden, entlang der berechneten Flugroute, wobei eine Kollision mit Objekten, beispielsweise mit Häusern oder Gebäuden, vermieden wird. Zur Kollisionsvermeidung kann das unbemannte automatisierte Fluggerät 1 über weitere Sensoren verfügen, beispielsweise Radarsensoren.

Das erfindungsgemäße Verfahren und System zur Erstellung von Vektorkarten kann vielseitig eingesetzt werden. Beispielsweise können die Vektorkarten zur Infrastrukturplanung und/oder Stadtplanung verwendet werden. Weiterhin können die Vektorkarten im Bereich des Katastrophenschutzes zur Vermeidung einer Fehlfunktion des Infrastrukturnetzes eingesetzt werden. Beispielsweise können mittels des erfindungsgemäßen Systems und Verfahrens Wasserdämme eines Wasserschutzsystems überwacht werden. Ein weiteres Anwendungsgebiet ist die Überwachung von Gas- oder Stromleitungen eines Versorgungsnetzwerkes.

Das erfindungsgemäße Verfahren und System bietet den besonderen Vorteil, dass auch unbegehbares Gelände bzw. unbegehbare Gebiete erfasst werden können. Weiterhin kann das unbemannte autonome Fluggerät das Gebiet G nahezu geräuschlos überfliegen, sodass eine Lärmbelästigung der Anwohner in dem Gebiet G vermieden wird.

Bei einer möglichen Ausführungsform verändert das unbemannte autonome Fluggerät seine Flughöhe innerhalb eines vorgegebenen zulässigen Flughöhenbereichs autonom in Abhängigkeit von weiteren Sensordaten, die es von Sensoren erhält. Diese Sensoren können an dem unbemannten autonomen Fluggerät 1 angebracht sein oder in dem vorgegebenen Gebiet G platziert sein.

Das Gebiet G kann sich auch unter Wasser befinden, wobei das Infrastrukturnetz beispielsweise Pipelines, Erdölleitungen, Bohreinrichtungen und dergleichen aufweist. Das Fluggerät 1 wird hierbei durch ein unbemanntes Unterwasserfahrzeug gebildet, welches den Meeresboden eines Unterwassergebietes kartografiert.

## Patentansprüche

1. Verfahren zur Erstellung einer Vektorkarte eines vorgegebenen Gebietes (G) mit den folgenden Schritten:
Erzeugen (S1) von Ortho-Luftaufnahmen durch eine senkrecht zur Erdoberfläche ausgerichtete erste Kamera (2-1), die an ein unbemanntes, automatisiertes Fluggerät (1) angebracht ist, das das vorgegebene Gebiet (G) in einer hohen Flughöhe (FH_{H}) überfliegt;
Auswerten (S2) der Ortho-Luftaufnahmen zur Ermittlung mindestens eines in dem Gebiet (G) befindlichen Infrastrukturnetzes;
Berechnen (S3) einer Flugroute für das unbemannte autonome Fluggerät (1) entlang des in dem Gebiet (G) befindlichen ermittelten Infrastrukturnetzes;
Erzeugen (S4) von Detail-Luftaufnahmen des Infrastrukturnetzes entlang der berechneten Flugroute durch eine schräg zu der Erdoberfläche ausgerichtete zweite Kamera (2-2), die an dem unbemannten automatisierten Fluggerät (1) angebracht ist, welches das in dem Gebiet (G) befindliche Infrastrukturnetz in mindestens einer niedrigen Flughöhe (FH_{L}) überfliegt, und
Berechnen (S5) der Vektorkarte des Gebietes (G) auf Basis der erzeugten Ortho-Luftaufnahmen und der erzeugten Detail-Luftaufnahmen.

2. Verfahren nach Anspruch 1,
wobei Attributdaten aus den erzeugten Detail-Luftaufnahmen des Infrastrukturnetzes extrahiert und georeferenziert werden.

3. Verfahren nach Anspruch 1 oder 2,
wobei Knoten und/oder Kanten des in den Ortho-Luftaufnahmen dargestellten Infrastrukturnetzes mit den georeferenzierten Attributdaten versehen werden.

4. Verfahren nach Anspruch 3,
wobei die mit Attributdaten versehenen Knoten und Kanten zu der Vektorkarte des Gebietes zusammengesetzt werden.

5. Verfahren nach einem der vorangehenden Ansprüche 1 bis 4, wobei die in der hohen Flughöhe (FH_{H}) erzeugten Ortho-Luftaufnahmen entzerrt und georeferenziert werden.

6. Verfahren nach einem der vorangehenden Ansprüche 1 bis 5, wobei die Ortho-Luftaufnahmen und/oder die Detail-Luftaufnahmen jeweils in unterschiedlichen spektralen Frequenzbereichen erzeugt werden.

7. Verfahren nach einem der vorangehenden Ansprüche 1 bis 6, wobei das Infrastrukturnetz, ein Verkehrsnetz, insbesondere Straßen- oder Schienennetz, oder ein Versorgungsnetz, insbesondere Stromversorgungsnetz oder Wasserversorgungsnetz, ist.

8. System zur Erstellung einer Vektorkarte eines vorgegebenen Gebietes mit:
einem unbemannten automatisierten Fluggerät (1), das eine erste Kamera (2-1) und zweite Kamera (2-2) umfasst, wobei die erste Kamera (2-1) senkrecht zu einer Erdoberfläche ausgerichtet ist, und die erste Kamera (2-1) dazu ausgelegt ist, in einer hohen Flughöhe (FH_{H}) des unbemannten automatisierten Fluggeräts (1) Ortho-Luftaufnahmen zu erzeugen;
einer Auswerteeinheit zur Auswertung der Ortho-Luftaufnahmen zur Ermittlung mindestens eines in dem Gebiet (G) befindlichen Infrastrukturnetzes;
einer ersten Berechnungseinheit zur Berechnung einer Flugroute für das unbemannte autonome Fluggerät (1) entlang des in dem Gebiet (G) befindlichen ermittelten Infrastrukturnetzes;
wobei die zweite Kamera (2-2) des unbemannten automatisierten Fluggeräts (1) schräg zu der Erdober-fläche ausgerichtet ist, und dazu ausgelegt ist, in mindestens einer niedrigen Flughöhe (FHL) des unbemannten automatisierten Fluggeräts (1) Detail-Luftaufnahmen des Infrastrukturnetzes entlang der berechneten Flugroute zu erzeugen; und
wobei das System eine zweite Berechnungseinheit zur Berechnung der Vektorkarte des Gebietes auf Basis der erzeugten Ortho-Luftaufnahmen und der erzeugten Detail-Luftaufnahmen des Infrastrukturnetzes umfasst.

## Claims

1. Method for producing a vector map of a prescribed area (G) having the following steps:
production (S1) of orthophotographs by a first camera (2-1) that is oriented at right angles to the earth's surface and that is fitted to an unmanned, automated aircraft (1) that overflies the prescribed area (G) at a high altitude (FH_{H});
evaluation (S2) of the orthophotographs in order to ascertain at least one infrastructure network located in the area (G);
computation (S3) of a flight route for the unmanned autonomous aircraft (1) along the ascertained infrastructure network located in the area (G);
production (S4) of detail aerial photographs of the infrastructure network along the computed flight route by a second camera (2-2) that is oriented obliquely with respect to the earth's surface and that is fitted to the unmanned automated aircraft (1) that overflies the infrastructure network located in the area (G) at at least one low altitude (FH_{L}), and
computation (S5) of the vector map of the area (G) on the basis of the orthophotographs produced and the detail aerial photographs produced.

2. Method according to Claim 1,
wherein attribute data are extracted from the detail aerial photographs produced for the infrastructure network and georeferenced.

3. Method according to Claim 1 or 2,
wherein nodes and/or edges of the infrastructure network presented in the orthophotographs are provided with the georeferenced attribute data.

4. Method according to Claim 3,
wherein the nodes and edges provided with attribute data are compiled to form the vector map of the area.

5. Method according to one of the preceding Claims 1 to 4,
wherein the orthophotographs produced at the high altitude (FH_{H}) have distortion eliminated and are georeferenced.

6. Method according to one of the preceding Claims 1 to 5,
wherein the orthophotographs and/or the detail aerial photographs are each produced in different spectral frequency ranges.

7. Method according to one of the preceding Claims 1 to 6,
wherein the infrastructure network is a traffic network, particularly a road or rail network, or a supply network, particularly a power supply network or water supply network.

8. System for producing a vector map of a prescribed area having:
an unmanned automated aircraft (1) comprising a first camera (2-1) and a second camera (2-2), wherein the first camera (2-1) is oriented at right angles to an earth's surface, and the first camera (2-1) is designed to produce orthophotographs at a high altitude (FH_{H}) of the unmanned automated aircraft (1);
an evaluation unit for evaluating the orthophotographs in order to ascertain at least one infrastructure network located in the area (G);
a first computation unit for computing a flight route for the unmanned autonomous aircraft (1) along the ascertained infrastructure network located in the area (G);
wherein the second camera (2-2) of the unmanned automated aircraft (1) is oriented obliquely with respect to the earth's surface and is designed to produce detail aerial photographs of the infrastructure network along the computed flight route at at least a low altitude (FHL) of the unmanned automated aircraft (1); and
wherein the system comprises a second computation unit for computing the vector map of the area on the basis of the orthophotographs produced and the detail aerial photographs produced of the infrastructure network.

## Revendications

1. Procédé destiné à établir une carte vectorielle d'une zone (G) prédéfinie, comprenant les étapes suivantes:
production (S1) d'ortho-images aériennes par une première caméra (2-1) orientée à la verticale de la surface terrestre, placée sur un aérodyne automatisé sans pilote (1) survolant la zone (G) prédéfinie à un plafond de vol élevé (FH_{H});
évaluation (S2) des ortho-images aériennes pour détecter au moins un réseau d'infrastructures se trouvant dans la zone (G);
calcul (S3) d'un itinéraire aérien pour l'aérodyne autonome sans pilote (1) le long du réseau d'infrastructures détecté se trouvant dans la zone (G);
production (S4) d'images aériennes détaillées du réseau d'infrastructures le long de l'itinéraire aérien calculé par une deuxième caméra (2-2) orientée en oblique par rapport à la surface terrestre, placée sur l'aérodyne automatisé sans pilote (1), lequel survole le réseau d'infrastructures se trouvant dans la zone (G) à au moins un plafond de vol bas (FH_{L}), et
calcul (S5) de la carte vectorielle de la zone (G) sur base des ortho-images aériennes produites et des images aériennes détaillées produites.

2. Procédé selon la revendication 1,
les données d'attribut venant des images aériennes détaillées produites du réseau d'infrastructures étant extraites et géoréférencées.

3. Procédé selon la revendication 1 ou 2,
des noeuds et/ou des bords du réseau d'infrastructures représentés dans les ortho-images aériennes étant présentes avec les données d'attribut géoréférencées.

4. Procédé selon la revendication 3,
les noeuds et bords avec les données d'attribution constituant la carte vectorielle de la zone.

5. Procédé selon l'une des revendications précédentes 1 à 4,
les ortho-images aériennes produites au plafond de vol élevé (FH_{H}) étant rectifiées et géoréférencées.

6. Procédé selon l'une des revendications précédentes 1 à 5,
les ortho-images aériennes et/ou les images aériennes détaillées étant respectivement produites à différentes plages de fréquence spectrales.

7. Procédé selon l'une des revendications précédentes 1 à 6,
le réseau d'infrastructures étant un réseau de communications, en particulier réseau routier et ferroviaire ou un réseau d'approvisionnement, en particulier un réseau d'approvisionnement en électricité ou un réseau d'approvisionnement en eau.

8. Système destiné à établir une carte vectorielle d'une zone prédéfinie avec:
un aérodyne automatisé sans pilote (1) comportant une première caméra (2-1) et une deuxième caméra (2-2),
la première caméra (2-1) étant orientée à la verticale de la surface terrestre et la première caméra (2-1) étant configurée pour produire des ortho-images aériennes à un plafond de vol élevé (FH_{H}) de l'aérodyne automatisé sans pilote (1);
une unité d'évaluation pour évaluer les ortho-images aériennes pour détecter au moins un réseau d'infrastructures se trouvant dans la zone (G);
une première unité de calcul pour calculer un itinéraire aérien pour l'aérodyne autonome sans pilote (1) le long du réseau d'infrastructures détecté se trouvant dans la zone; la deuxième caméra (2-2) de l'aérodyne automatisé sans pilote (1) étant orientée en oblique par rapport à la surface terrestre et étant configuré pour produire à au moins un plafond de vol bas (FH_{L}) de l'aérodyne automatisé sans pilote (1) des images aériennes détaillées du réseau d'infrastructures le long de l'itinéraire aérien calculé;
et
le système comprenant une deuxième unité de calcul pour le calcul de la carte vectorielle de la zone sur base des ortho-images aériennes produites et des images aériennes détaillées produites du réseau d'infrastructures.
